# EUROPÄISCHE PATENTSCHRIFT

(11) **EP 1 904 363 B1**
(45) Veröffentlichungstag und Bekanntmachung des Hinweises auf die Patenterteilung: **09.12.2009**
(21) Anmeldenummer: 06722851.0
(22) Anmeldetag: 10.05.2006
(51) Int. Cl.: B62D 37/02, B62D 35/00, B60T 1/16

(54) **LUFTLEITVORRICHTUNG EINES FAHRZEUGS**
AIR-GUIDING DEVICE OF A VEHICLE
DEFLECTEUR D'AIR D'UN VEHICULE

(30) Priorität: 11.05.2005 DE 102005021832
(43) Veröffentlichungstag der Anmeldung: 02.04.2008
(73) Patentinhaber: Webasto AG, 82131 Stockdorf (DE)
(72) Erfinder: WEGENER, Fritz, 82205 Gilching (DE)
(86) Internationale Anmeldenummer: PCT/DE2006/000799
(87) Internationale Veröffentlichungsnummer: WO 2006/119746

(56) Entgegenhaltungen:
- DE-A1- 4 207 658
- DE-A1- 10 222 082
- DE-A1- 10 309 369
- PATENT ABSTRACTS OF JAPAN Bd. 009, Nr. 238 (M-416), 25. September 1985 (1985-09-25) -& JP 60 092993 A (NIPPON DENSO KK; others: 01), 24. Mai 1985 (1985-05-24)

## Beschreibung

Die vorliegende Erfindung betrifft eine Luftleitvorrichtung eines Fahrzeugs nach dem Oberbegriff des Anspruchs 1. Eine solche Luftleitvorrichtung ist aus der DE 102 22 082 bekannt.

Eine derartige Luftleitvorrichtung ist beispielsweise aus der DE 103 09 369 A1 bekannt und umfasst einen im Heckbereich eines Kraftfahrzeugs angeordneten Spoiler, der mittels einer Aufstellmechanik zwischen einer Ruhestellung, in der er im Wesentlichen innerhalb der Fahrzeugkontur liegt, und einer Betriebsstellung, in der er die Fahrzeugkontur überragt, verstellbar ist. Die Aufstellmechanik ist konstruktiv einfach realisiert und kombiniert bei der Ausstellbewegung des Spoilers Translations- und Rotationsanteile, so dass der Spoiler in der Betriebsstellung vorteilhaft eine zur Fahrzeugkontur beabstandete Lage einnimmt. Konstruktionsbedingt erlaubt die bekannte Mechanik einen maximalen Ausstellwinkel des Spoilers (bezüglich dessen Ruhestellung) von etwa 40°.

Bekanntlich können durch einen solchen Spoiler z. B. die aerodynamischen Eigenschaften eines Kraftfahrzeugs und damit das Fahrverhalten vorteilhaft beeinflusst werden. Insbesondere kann bei höheren Geschwindigkeiten die Bodenhaftung des Fahrzeugs durch eine Abtriebswirkung des Spoilers vergrößert werden.

Aus der DE 200 01 695 U1 ist ein Automobilspoiler bekannt, der beispielsweise in Kopplung mit dem Bremssystem des Automobils in eine Stellung hohen Luftwiderstands gebracht werden kann, um als eine "Luftbremse" zu wirken, so dass die Wirkung herkömmlicher Bremsen verstärkt wird. Die Ausstellbewegung des Spoilers ist als eine einfache Verschwenkung um eine in Fahrzeugquerrichtung sich erstreckende Schwenkwelle vorgesehen. Die Kopplung des Spoilers mit dem Bremssystem könnte gemäß dieser Veröffentlichung mit einer (nicht näher beschriebenen) hydraulischen Schaltung realisiert sein.

Es ist eine Aufgabe der vorliegenden Erfindung, eine Luftleitvorrichtung der eingangs genannten Art so weiterzubilden, dass ein größerer maximaler Ausstellwinkel des Spoilers ermöglicht wird.

Diese Aufgabe wird durch eine Luftleitvorrichtung mit den in Anspruch 1 angegebenen Merkmalen gelöst.

Der Begriff "Spoiler" bezeichnet hierbei einen während der Fahrt angeströmten Luftleitkörper, der beispielsweise als ein starres, etwa plattenförmiges Luftleitprofil ausgebildet sein kann. Bei der Formgestaltung des Spoilers kann auf die in diesem technischen Bereich in großer Vielfalt bekannten Gestaltungen zurückgegriffen werden. Zur Verringerung des Auftriebs während der Fahrt bzw. zur Erzeugung eines Abtriebs ist oftmals ein Luftleitprofil günstig, welches die (umgekehrte) Form eines Flugzeug-Tragflügels besitzt.

Wenngleich der Spoiler bevorzugt im Heckbereich des Fahrzeugs angeordnet ist, so ist dies keineswegs zwingend. Alternativ kann der Spoiler auch z. B. im Dachbereich angeordnet sein.

Die Spoilerbasis kann separat oder einteilig mit dem Spoiler selbst ausgebildet sein und dient als "Bindeglied" zwischen der erfindungsgemäßen Schwenklenkermechanik und der aerodynamisch wirksamen Spoilerfläche. Bevorzugt ist die Spoilerbasis an der Unterseite des Spoilers angeordnet, z. B. als separates Teil daran befestigt.

Bei der Erfindung ist wesentlich, dass das Gelenk zwischen dem vorderen Bereich der Spoilerbasis und dem zweiten Ende des ersten Schwenklenkers beim Ausstellen des Spoilers überstreckt werden kann. Der Begriff "Überstreckung" bezeichnet im Rahmen der Erfindung den Umstand, dass der betreffende Gelenkwinkel sich bei der Spoilerverstellung über 180° hinaus vergrößern kann. Dieser Gelenkwinkel wird eingeschlossen zwischen einerseits der Strecke zwischen den beiden Enden des ersten Schwenklenkers und andererseits der Strecke zwischen den beiden Anlenkungsstellen an der Spoilerbasis.

Die Erfindung kombiniert somit in konstruktiv einfacher Weise den Vorteil einer in der Betriebsstellung zur Fahrzeugkontur beabstandeten Lage des Spoilers mit einem erhöhten maximalen Ausstellwinkel des Spoilers.

In einer Ausführungsform ist vorgesehen, dass in der Ruhestellung die Spoilerbasis und insbesondere die Spoilerbasis samt Spoiler in einer Aussparung der Fahrzeugoberfläche aufgenommen ist. Bevorzugt ist der Spoiler in seiner Ruhestellung in einer muldenartigen Aussparung der Fahrzeugkarosserie im Wesentlichen bündig zur Fahrzeugkontur angeordnet. Damit kann der Spoiler in eine aerodynamisch mehr oder weniger unwirksame Ruhestellung gebracht werden.

In einer besonders bevorzugten Ausführungsform ist vorgesehen, dass die Verstelleinrichtung bei Überstreckung des Gelenks zwischen dem vorderen Bereich der Spoilerbasis und dem zweiten Ende des ersten Schwenklenkers wenigstens eine zweite Betriebsstellung vorsieht, in welcher der Spoiler während der Fahrt eine Bremswirkung bereitstellt. Dies bedeutet, dass zusätzlich zu der oder den eine Abtriebswirkung bereitstellenden ersten Betriebsstellung(en) wenigstens eine weitere, als zweite Betriebsstellung bezeichnete Spoilerstellung vorgesehen ist, in welcher der Spoiler über die erste Betriebsstellung hinaus noch weiter ausgestellt ist und somit eine Bremswirkung bereitstellen kann.

In einer Ausführungsform ist vorgesehen, dass der Ausstellwinkel des Spoilers in der ersten Betriebsstellung, d. h. dessen Verschwenkung bezüglich seiner Orientierung in der Ruhestellung, im Bereich von 10° bis 50° liegt. Es können eine oder mehrere erste Betriebsstellungen mit jeweils vorgegebenem Ausstellwinkel vorgesehen sein. Insbesondere wenn die Verstelleinrichtung eine automatische Verstellung des Spoilers in Abhängigkeit von vorbestimmten Fahrparametern, insbesondere z. B. der Fahrgeschwindigkeit vorsieht, so kann zur optimalen Anpassung der Aerodynamik vorteilhaft zumindest im Verstellbereich von der Ruhestellung bis zur ersten Betriebsstellung des Spoilers eine stufenlose Verstellbarkeit vorgesehen sein.

Auf Grund der erfindungsgemäßen Gestaltung kann der Spoiler sehr weit ausgestellt werden, so dass eine Ruhestellung, in welcher der Spoiler wenigstens teilweise in der Fahrzeugkontur versenkt ist, einer effizienten Bremswirkung des Spoilers in seiner zweiten Betriebsstellung nicht entgegensteht. Der maximal erreichbare Ausstellwinkel des Spoilers beträgt in einer bevorzugten Ausführungsform mindestens 70°, insbesondere etwa 90°.

In einer Ausführungsform ist vorgesehen, dass in der zweiten Betriebsstellung der Ausstellwinkel des Spoilers im Bereich von 50° bis 90° liegt. Für eine besonders effiziente Bremswirkung ist ein Ausstellwinkel von 85°+/- 5° bevorzugt.

In einer bevorzugten Ausführungsform beträgt der Winkel des Gelenks zwischen dem vorderen Bereich der Spoilerbasis und dem zweiten Ende des ersten Schwenklenkers in der Ruhestellung weniger als 30° und in der zweiten Betriebsstellung mehr als 210°.

In einer Ausführungsform der Erfindung ist vorgesehen, dass die zweite Betriebsstellung der kinematisch maximal überstreckten Stellung des Gelenks zwischen dem vorderen Bereich der Spoilerbasis und dem zweiten Ende des ersten Schwenklenkers entspricht. Die "maximal überstreckte Stellung" ist erreicht, wenn der aktuelle Ausstellwinkel auf Grund der Distanzen zwischen den vier maßgeblichen Gelenkpunkten (an den beiden Enden der beiden Schwenklenker) unmöglich noch weiter vergrößert werden kann.

Ein mechanischer Anschlag ist vorgesehen, der die Ausstellbewegung der Gelenkanordnung bereits vor Erreichen der maximal überstreckten Stellung stoppt. Dies vermindert jedoch den von der Kinematik her denkbaren Winkelverstellbereich, so dass ein solcher Anschlag bei einer Stellung des betreffenden Gelenks erreicht wird, die maximal 10° von dessen maximal überstreckter Stellung entfernt ist. Ein Vorteil eines solchen mechanischen Anschlags besteht allerdings insbesondere darin, dass die in der Praxis auftretende Druck- bzw. Zugbelastung zwischen den Verbindungsgliedern der vier maßgeblichen Gelenkpunkte reduziert werden kann.

Prinzipiell ist es denkbar, dass die Vertelleinrichtung als eine Baueinheit z. B. mittig in Fahrzeugquerrichtung angeordnet ist. Für eine stabilere Halterung des Spoilers ist es jedoch bevorzugt, dass die Verstelleinrichtung wenigstens zwei in Fahrzeugquerrichtung betrachtet verteilt (z. B. äquidistant) angeordnete Verstelleinheiten aufweist. Bevorzugt sind symmetrisch zu einer vertikalen Fahrzeuglängsmittelebene zwei gleichartige Verstelleinheiten vorgesehen, die jeweils einen ersten Schwenklenker und einen zweiten Schwenklenker und die endseitig vorgesehenen Schwenklager bzw. Anlenkungen umfassen.

In einer konstruktiv besonders einfachen Ausführungsform sind die ersten Enden der beiden Schwenklenker an bezüglich der Karosserie ortsfesten Schwenklagern gelagert. Es soll jedoch nicht ausgeschlossen sein, dass wenigstens eines der beiden Schwenklager beim Ausstellen des Spoilers bewegt wird. Damit kann z. B. die Kinematik der Spoilerbewegung modifiziert werden. Außerdem ist es denkbar, dass die steuerbaren Antriebsmittel unmittelbar eine Verlagerung des ersten Schwenklagers oder beider Schwenklager bewirken (etwa in einer Führungsschiene) und diese Verlagerung über eine Steuerflächenanordnung (z. B. Kulisse mit Kulissenstift) dann die zum Ausstellen des Spoilers erforderliche Verschwenkung der Schwenklenker bewirkt.

Zur Erzielung eines möglichst großen Ausstellwinkelbereichs ist es bevorzugt, dass der Abstand der karosserieseitigen Schwenklager der beiden Schwenklenker größer als der Abstand der beiden Anlenkungen im Bereich der Spoilerbasis ist. In dieser Hinsicht ist es ferner bevorzugt, wenn die Länge des ersten Schwenklenkers im Bereich von 30% bis 90% der Länge des zweiten Schwenklenkers liegt.

Die Verstelleinrichtung kann beispielsweise elektrisch (z. B. Elektromotor) und/oder hydraulisch (z. B. Hydraulikzylinder) und/oder pneumatisch (z. B. Pneumatikzylinder) arbeiten. Der betreffende Aktor wird bevorzugt in Abhängigkeit vom Bewegungszustand des Fahrzeugs aktiviert. In einer diesbezüglichen Ausführungsform ist vorgesehen, dass die einzige erste Betriebsstellung bei Überschreitung einer vorbestimmten Fahrgeschwindigkeit angesteuert wird. Alternativ, wenn mehrere erste Betriebsstellungen vorgesehen sind, so können diese nacheinander bei Überschreitung vorbestimmter Fahrgeschwindigkeiten angesteuert werden, wobei der Ausstellwinkel mit zunehmender Fahrgeschwindigkeit ansteigt.

Für die Ansteuerung der zweiten Betriebsstellung ("Bremsstellung") ist bevorzugt vorgesehen, dass diese durch ein vorbestimmtes "aktivierendes Ereignis" ausgelöst wird und zu einer sofortigen Verstellung des Spoilers von der aktuellen Stillung in die zweite Betriebsstellung führt. Bei einem vorbestimmten "deaktivierenden Ereignis" wird der Spoiler aus der zweiten Betriebsstellung wieder zurückverstellt, bevorzugt in die bzw. eine der ersten Betriebsstellungen oder (bei fahrzustandabhängiger Spoilerverstellung) in die dem aktuellen Fahrzustand entsprechende Spoilerstellung.

Als aktivierendes Ereignis kann beispielsweise der Fall vorgesehen sein, dass die aktuelle Fahrgeschwindigkeit eine vorbestimmte Grenze übersteigt und hierbei eine Bremseinrichtung des Fahrzeugs in einem Ausmaß betätigt wird, welches eine vorbestimmte Grenze übersteigt. Das Ausmaß der Bremsbetätigung kann bei einem Kraftfahrzeug z. B. anhand der Bremspedalstellung erfasst werden. Alternativ oder zusätzlich kann eine manuelle Betätigung eines Bedienelements durch den Fahrer als aktivierendes Ereignis vorgesehen sein.

Als deaktivierende Ereignisse bzw. als Kriterien, aus denen durch eine logische Verknüpfung das Vorliegen eines deaktivierenden Ereignisses abgeleitet werden kann, kommen in Betracht: Verstreichen einer vorbestimmten Zeitspanne seit dem aktivierenden Ereignis, Unterschreiten einer vorbestimmten Fahrgeschwindigkeit, Ende der Bremsbetätigung durch den Fahrer, oder manuelle Deaktivierung mittels eines Bedienelements durch den Fahrer.

In einer besonders bevorzugten Ausführungsform ist vorgesehen, dass die Antriebsmittel ein Antriebsglied umfassen, welches unmittelbar an dem ersten Schwenklenker oder einer drehfest mit dem ersten Ende des ersten Schwenklenkers verbundenen Schwenklenkerwelle angreift.

Ein unmittelbar an dem ersten Schwenklenker angreifendes Antriebsglied ist von einem Antriebslenker gebildet sein, der einerseits in einem mittleren Bereich des ersten Schwenklenkers angelenkt ist und andererseits am Ende einer motorisch betriebenen Kurbel angelenkt ist.

Ein an einer Schwenkwelle des ersten Schwenklenkers angreifendes Antriebsglied kann beispielsweise von einem Abtriebszahnrad eines motorischen Antriebs gebildet sein, welches mit einer entsprechenden Verzahnung dieser Welle in Eingriff steht. Alternativ kann zum Antrieb der Schwenkwelle auch z. B. eine so genannte Kreuzlenkermechanik verwendet werden.

In beiden Fällen handelt es sich bei dem motorischen Antrieb bevorzugt um einen elektrischen Schrittmotor.

Die Erfindung wird nachfolgend anhand eines Ausführungsbeispiels mit Bezug auf die beigefügten Zeichnungen näher beschrieben. Die Bezugszahlen von zweifach vorgesehenen, in ihrer Wirkung jedoch analogen Komponenten dieses Ausführungsbeispiels, sind jeweils ergänzt durch einen Bindestrich und "1" bzw. "2". Auf einzelne solcher Komponenten oder auf die Gesamtheit solcher Komponenten wird im Folgenden auch durch die nicht-ergänzte Bezugszahl Bezug genommen. Es stellen dar:
- Figur 1: ist eine perspektivische Ansicht des Heckbereichs eines Fahrzeugs mit einem Spoiler in seiner Ruhestellung,
- Figur 2: ist eine perspektivische Ansicht des Heckbereichs, wobei der Spoiler in eine erste Betriebsstellung ("Abtriebsstellung") ausgefahren ist,
- Figur 3: ist eine perspektivische Ansicht des Heckbereichs, wobei der Spoiler in eine zweite Betriebsstellung ("Bremsstellung") ausgefahren ist,
- Figur 4: ist eine schematische Seitenansicht der Spoiler-Verstellmechanik bei eingefahrenem Spoiler,
- Figur 5: ist eine schematische Seitenansicht der Spoiler-Verstellmechanik während des Ausfahrens in Richtung der ersten Betriebsstellung,
- Figur 6: ist eine schematische Seitenansicht der Spoiler-Verstellmechanik, wobei der Spoiler in seine erste Betriebsstellung ausgefahren ist,
- Figur 7: ist eine schematische Seitenansicht der Spoiler-Verstellmechanik, wobei der Spoiler in seine zweite Betriebsstellung ausgefahren ist, und
- Figur 8: ist eine schematische Seitenansicht der Spoiler-Verstellmechanik zur Veranschaulichung des Bewegungsablaufs von der Ruhestellung bis in die zweite Betriebsstellung (und umgekehrt).

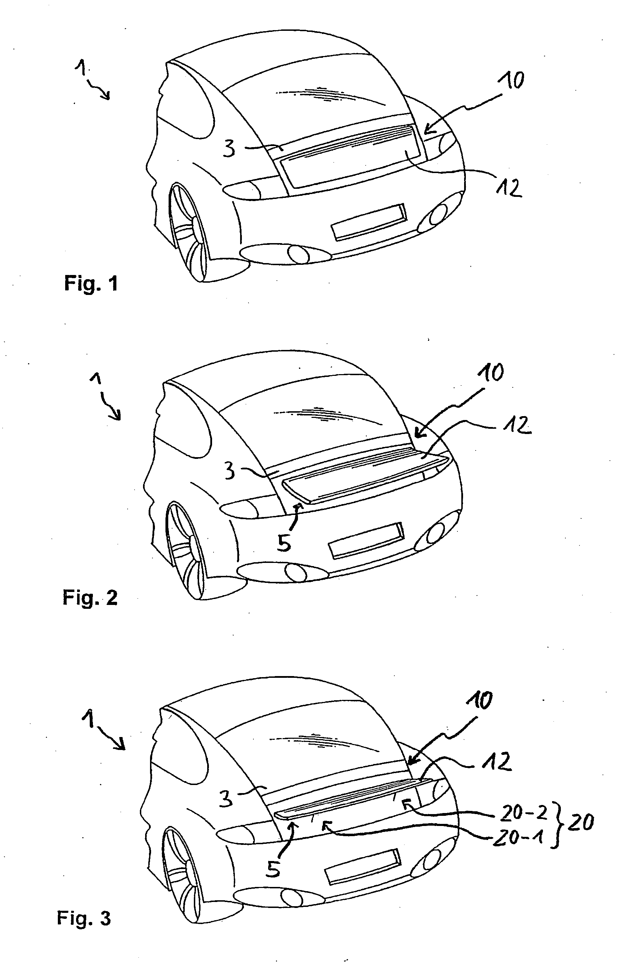

Fig. 1 zeigt eine im Heckbereich eines Kraftfahrzeugs 1 vorgesehene Luftleitvorrichtung 10 umfassend einen tragflügelartigen Spoiler 12.

In der in Fig. 1 dargestellten Ruhestellung ist die Oberseite des Spoilers 12 im Wesentlichen bündig zu einer Fahrzeugkontur bzw. Fahrzeugoberfläche 3 im Heckbereich.

Mittels einer in Fig. 1 nicht dargestellten Verstelleinrichtung lässt sich der Spoiler 12 aus der in die Fahrzeugkontur 3 abgesenkten Ruhestellung in eine erste Betriebsstellung ausschwenken, wie sie in Fig. 2 dargestellt ist.

Die Ausstellbewegung des Spoilers 12 aus seiner Ruhestellung (Fig. 1) in die erste Betriebsstellung (Fig. 2) ist eine aus einer Translation und einer Rotation zusammengesetzte Bewegung.

Fig. 2 veranschaulicht die erste Betriebsstellung, in welche der Spoiler 12 mittels der Verstelleinrichtung über die Fahrzeugkontur 3 ausgestellt wurde, um während der Fahrt in an sich bekannter Weise eine Abtriebswirkung bereitzustellen, durch welche die Bodenhaftung des Fahrzeugs 1 verbessert wird. Diese erste Betriebsstellung wird nachfolgend daher auch als "Abtriebsstellung" bezeichnet. In der Abtriebsstellung beträgt der Ausstellwinkel des Spoilers 12 (bezüglich der Ruhestellung) etwa 30°.

Der Übergang zwischen Ruhestellung und Abtriebsstellung wird im dargestellten Ausführungsbeispiel automatisch bei Überschreitung einer vorbestimmten Fahrgeschwindigkeit (z. B. 60 km/h) angesteuert. Nach Unterschreitung dieser Geschwindigkeitsgrenze wird der Spoiler 12 wieder eingefahren.

Bei Überschreitung einer weiteren vorbestimmten Fahrgeschwindigkeit, die bevorzugt wesentlich größer als die oben genannte Fahrgeschwindigkeit ist, gestattet die Verstellautomatik die Ansteuerung einer zweiten Betriebsstellung, in welcher der Spoiler 12 über die in Fig. 2 gezeigte Abtriebsstellung hinaus weiter ausgestellt ist, um während der Fahrt eine Bremswirkung bereitzustellen.

Fig. 3 zeigt diese weitere Betriebsstellung des Spoilers 12. Der Übergang von der Abtriebsstellung (Fig. 2) in die zweite Betriebsstellung (Fig. 3), nachfolgend auch als "Bremsstellung" bezeichnet, wird ausgelöst durch eine Betätigung der Fahrzeugbremseinrichtung durch den Fahrer in einem Ausmaß, welches ein vorbestimmtes Ausmaß übersteigt.

In der Bremsstellung beträgt der Ausstellwinkel des Spoilers 12 etwa 90°. In dieser Stellung wird somit eine beträchtliche zusätzliche Bremswirkung erzielt.

Sobald das Ausmaß der vom Fahrer vorgenommenen Bremsbetätigung wieder unter die vorbestimmte Ausmaßgrenze abfällt (oder sogar eine Beschleunigung des Fahrzeugs 1 vorgenommen wird) oder die Fahrgeschwindigkeit wieder unter die vorbestimmte zweite Grenzgeschwindigkeit abfällt, wird der Spoiler 12 automatisch wieder in die der aktuellen Fahrgeschwindigkeit entsprechende Stellung zurückverstellt.

Wie es in Fig. 3 angedeutet ist, weist die zum Verstellen des Spoilers 12 zwischen der Ruhestellung, der Abtriebsstellung und der Bremsstellung verwendete Mechanik zwei in Fahrzeugquerrichtung betrachtet voneinander beabstandet angeordnete Verstelleinheiten 20-1 und 20-2 auf, die zusammen die Verstelleinrichtung 20 ausbilden, welche den Spoiler 12 besonders stabil abstützt.

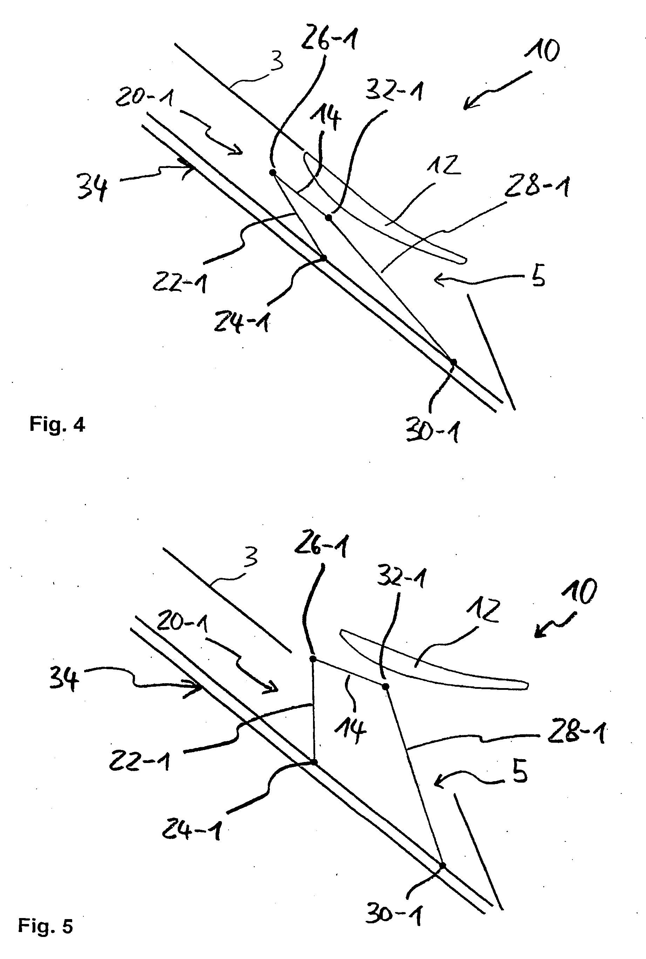

Die konstruktive Realisierung der Verstelleinrichtung 20 wird nachfolgend mit Bezug auf die Fig. 4 bis 7 detaillierter erläutert. Der Einfachheit der Darstellung halber sind die in den Fig. 4 bis 7 eingezeichneten Komponenten stark schematisiert dargestellt. Für die praktische Realisierung dieser Komponenten kann beispielsweise auf die entsprechenden Gestaltungen der Schwenklenkermechanik zurückgegriffen werden, wie sie in der eingangs bereits erwähnten DE 103 09 369 A1 beschrieben ist.

Die Verstelleinheiten 20-1 und 20-2 sind im dargestellten Ausführungsbeispiel identisch ausgebildet. Daher sind in den Fig. 4 bis 7 beispielhaft die Komponenten der (linken) Verstelleinheit 20-1 dargestellt und die entsprechenden Komponenten der (rechten) Verstelleinheit 20-2 weggelassen.

Fig. 4 veranschaulicht die Ruhestellung des Spoilers 12, der in diesem Zustand in einer Mulde oder Aussparung 5 der Karosserieoberfläche 3 aufgenommen ist. Der Spoiler 12 ist mit einer Spoilerbasis 14 verbunden, beispielsweise einem Trägerkörper, der an der Unterseite des Spoilerkorpus angeschraubt ist.

Die Verstelleinheit 20-1 umfasst einen vorderen Schwenklenker 22-1, von welchem ein erstes Ende in einem vorderen Schwenklager 24-1 derart gelagert ist, dass der vordere Schwenklenker 22-1 um eine in Fahrzeugquerrichtung verlaufende erste Schwenkachse verschwenkt werden kann. Das andere Ende des vorderen Schwenklenkers 22-1 ist über eine vordere Anlenkung 26-1 mit der Spoilerbasis 14 verbunden. Diese vordere Anlenkung 26-1 ist ebenfalls als ein Schwenklager bzw. Gelenk ausgebildet, welches eine Relativverschwenkung zwischen der Spoilerbasis 14 und dem vorderen Schwenklenker 22-1 um eine in Fahrzeugquerrichtung verlaufende Achse gestattet.

Die Verstelleinheit 20-1 umfasst ferner einen hinteren Schwenklenker 28-1, von welchem ein erstes Ende in einem hinteren Schwenklager 30-1 derart gelagert ist, dass der hintere Schwenklenker 28-1 um eine in Fahrzeugquerrichtung verlaufende zweite Schwenkachse verschwenkt werden kann. Das andere Ende des hinteren Schwenklenkers 28-1 ist über eine hintere Anlenkung 32-1 mit der Spoilerbasis 14 verbunden, wobei diese Anlenkung eine Relativverschwenkung zwischen der Spoilerbasis und dem hinteren Schwenklenker 28-1 gestattet.

Die beiden karosserieseitigen Schwenklager 24-1 und 30-1 sind bezüglich der Karosserie ortsfest an einer Tragstruktur 34 des Fahrzeugs 1 angeordnet.

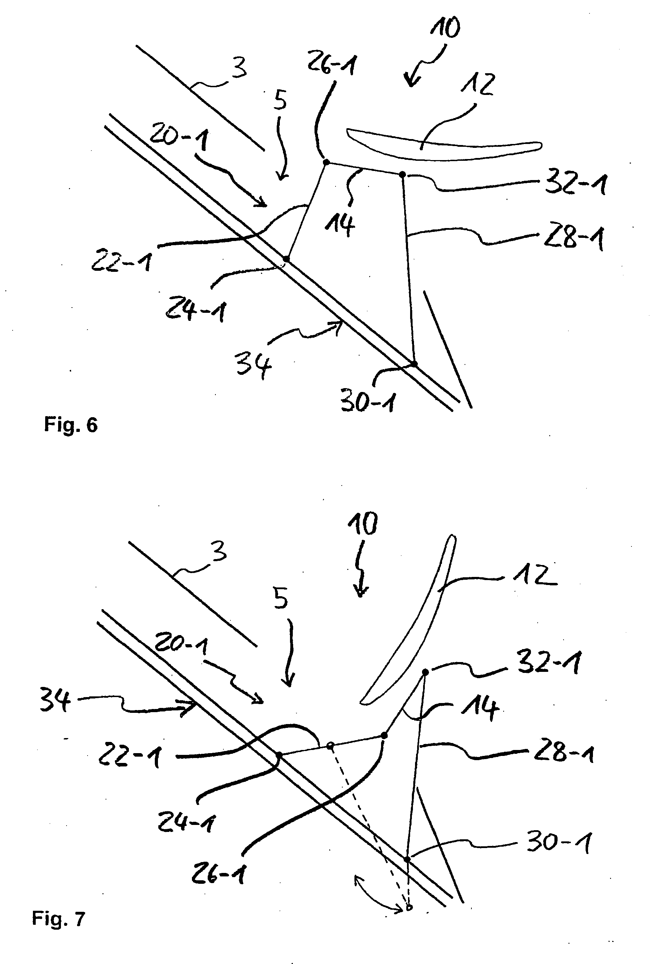

Auf Grund der dargestellten geometrischen Verhältnisse bzw. der gewählten Abstände zwischen den Gelenkstellen 24-1, 26-1, 30-1 und 32-1 kann durch eine simultane Verschwenkung der beiden Schwenklenker 22-1 und 28-1 die Spoilerbasis 14 und somit der Spoiler 12 ausgehend von der in Fig. 4 dargestellten Ruhestellung über eine in Fig. 5 dargestellte Zwischenstellung in die in Fig. 6 dargestellte Abtriebsstellung, und bedarfsweise weiter in die in Fig. 7 dargestellte Bremsstellung verstellt werden.

In der Bremsstellung gemäß Fig. 7 ist das Gelenk 26-1 (zwischen der Spoilerbasis 14 und dem oberen Ende des vorderen Schwenklenkers 22-1) überstreckt. Diese Überstreckung ermöglicht bei den dargestellten geometrischen Verhältnissen, dass der Spoiler 12 in dieser Situation um etwa 90° aus seiner Ruhestellung rotiert ist.

Die in den Fig. 4 bis 7 dargestellten Komponenten 22-1, 24-1, 26-1, 28-1, 30-1, 32-1 sind auf der rechten Fahrzeugseite (symmetrisch) nochmals identisch für die (nicht dargestellte) rechte Verstelleinheit 20-2 ausgebildet.

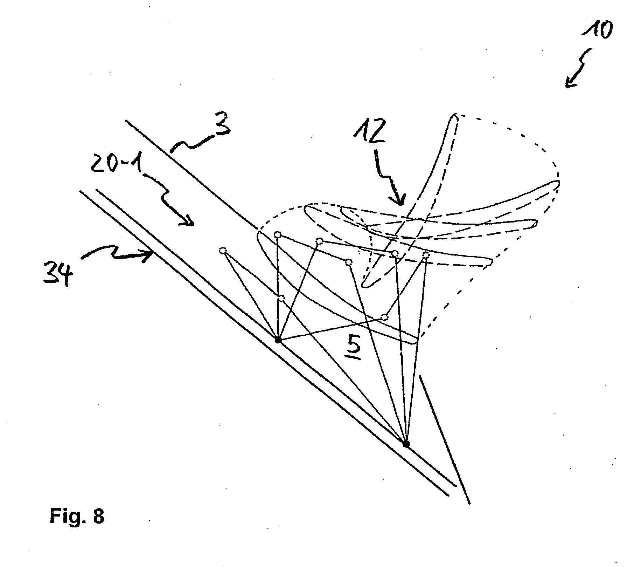

Die mittels der Verstelleinrichtung bewerkstelligte Kinematik der Spoilerverstellung bzw. der Gesamtbewegungsablauf der Verstelleinheit 20-1 mit dem Spoiler 12 zwischen Ruhestellung und Bremsstellung ist nochmals in der kombinierten Darstellung nach Fig. 8 dargestellt.

Die zum Verstellen vorgesehenen automatisch ansteuerbaren Antriebsmittel verschwenken simultan alle vier Schwenklenker 22, 28. Hierbei kann vorgesehen sein, dass die Antriebsmittel lediglich auf eine der beiden Verstelleinheiten 20-1, 20-2 oder auf beide Einheiten einwirken.

Die Antriebsmittel können beispielsweise einen elektromotorisch betätigten Kurbeltrieb umfassen, bei welchem z. B. eine im Bereich des hinteren Schwenklagers 30 drehbar gelagerte Kurbelstange gelenkig mit einer vergleichsweise langen Schubstange verbunden ist, die wiederum in einem mittleren Bereich des vorderen Schwenklenkers 22 angelenkt ist. Dieses Antriebskonzept ist gestrichelt in Fig. 7 eingezeichnet.

Auch ist es denkbar, im Bereich der Spoilerbasis 14 einen Aktor zu integrieren, welcher unmittelbar auf den vorderen Schwenklenker 22 einwirkt, um den Winkel zwischen diesen Komponenten 14, 22 gezielt einzustellen.

Ein bevorzugtes Konzept besteht jedoch darin, eine drehfest mit dem vorderen Schwenklenker 22 verbundene, in Fahrzeugquerrichtung verlaufende Schwenklenkerachse unmittelbar elektromotorisch anzutreiben. Im Hinblick auf eine simultane Verstellung der beiden Verstelleinheiten 20-1 und 20-2 ist es hierbei bevorzugt, wenn eine solche Schwenklenkerachse gemeinsam für die beiden vorderen Schwenklenker 22 vorgesehen ist, d. h. sowohl mit dem linken vorderen Schwenklenker als auch dem rechten vorderen Schwenklenker (und gegebenenfalls mit den vorderen Schwenklenkern 22 weiterer Verstelleinheiten) drehfest verbunden ist.

### Bezugszeichenliste

- 1: Kraftfahrzeug
- 3: Karosserieoberfläche
- 5: Aussparung
- 10: Luftleitvorrichtung
- 12: Spoiler
- 14: Spoilerbasis
- 20: Verstelleinrichtung
- 22: vorderer Schwenklenker
- 24: vorderes Schwenklager
- 26: vordere Anlenkung
- 28: hinterer Schwenklenker
- 30: hinteres Schwenklager
- 32: hintere Anlenkung
- 34: Tragstruktur

## Patentansprüche

1. Luftleitvorrichtung eines Fahrzeugs (1), umfassend einen an einer Spoilerbasis (14) befestigten Spoiler (12) sowie eine Verstelleinrichtung (20) zum Verstellen der Spoilerbasis (14) zwischen einer Ruhestellung, in welcher der Spoiler (12) im Wesentlichen in der Fahrzeugkontur (3) liegt, und wenigstens einer ersten Betriebsstellung, in welcher der Spoiler (12) über die Fahrzeugkontur (3) ausgestellt ist, um während der Fahrt eine Abtriebswirkung bereitzustellen, wobei die Verstelleinrichtung (20) umfasst:
- einen ersten Schwenklenker (22), von welchem ein erstes Ende an der Karosserie des Fahrzeugs (1), für einen Verschwenkbarkeit des ersten Schwenklenkers (22) um eine in Fahrzeugquerrichtung verlaufende erste Schwenkachse geeignet gelagert (24) ist, und von welchem ein zweites Ende in einem vorderen Bereich der Spoilerbasis angelenkt (26) ist,
- einen zweiten Schwenklenker (28), von welchem ein erstes Ende an der Karosserie des Fahrzeugs (1), hinter dem ersten Ende des ersten Schwenklenkers (22), für eine Verschwenkbarkeit des zweiten Schwenklenkers (28) um eine in Fahrzeugquerrichtung verlaufende zweite Schwenkachse geeignet gelagert (30) ist, und von welchem ein zweites Ende in einem hinteren Bereich der Spoilerbasis (14) angelenkt (32) ist, wobei der erste Schwenklenker (22) kürzer als der zweite Schwenklenker (28) ist, und
- steuerbare Antriebsmittel zum Verschwenken der beiden Schwenklenker (22, 28), um die Spoilerbasis (14) zwischen der Ruhestellung und der Betriebsstellung zu verstellen,
wobei die Verstelleinrichtung (20) dazu geeignet ausgebildet ist, das Gelenk (26) zwischen dem vorderen Bereich der Spoilerbasis (14) und dem zweiten Ende des ersten Schwenklenkers (22) beim Ausstellen des Spoilers (12) zu überstrecken,
**dadurch gekennzeichnet, dass** die Antriebsmittel einen unmittelbar an dem ersten Schwenklenker (22) angreifenden Antriebslenker umfassen, welcher einerseits in einem mittleren Bereich des ersten Schwenklenkers (22) angelenkt ist und andererseits am Ende einer motorisch betreibbaren Kurbel angelenkt ist, und dass ein mechanischer Anschlag zum Stoppen der Ausstellbewegung vor Erreichen der maximal überstreckten Stellung des Gelenks (26) vorgesehen ist und der Anschlag bei einer Stellung des Gelenks (26) erreicht wird, die maximal 10° von der maximal überstreckten Stellung entfernt ist.

2. Luftleitvorrichtung nach Anspruch 1, wobei in der ersten Betriebsstellung der Ausstellwinkel des Spoilers (12) im Bereich von 10° bis 50° liegt.

3. Luftleitvorrichtung nach einem der vorangehenden Ansprüche, wobei zumindest im Verstellbereich von der Ruhestellung bis zur ersten Betriebsstellung des Spoilers (12) eine stufenlose Verstellbarkeit vorgesehen ist.

4. Luftleitvorrichtung nach einem der vorangehenden Ansprüche, wobei die Verstelleinrichtung (20) bei Überstreckung des Gelenks (26) zwischen dem vorderen Bereich der Spoilerbasis (14) und dem zweiten Ende des ersten Schwenklenkers (22) wenigstens eine zweite Betriebsstellung vorsieht, in welcher der Spoiler (12) während der Fahrt eine Bremswirkung bereitstellt.

5. Luftleitvorrichtung nach Anspruch 4, wobei in der zweiten Betriebsstellung der Ausstellwinkel des Spoilers (12) um Bereich von 50° bis 90° leigt.

6. Luftleitvorrichtung nach Anspruch 4 oder 5, wobei die zweite Betriebsstellung der vor dem Erreichen der maximal überstreckten Stellung des Gelenks (26) durch den mechanischen Anschlag gestoppten Stellung entspricht.

7. Luftleitvorrichtung nach einem der vorangehenden Ansprüche, wobei die Verstelleinrichtung (20) aus wenigstens zwei in Fahrzeugquerrichtung betrachtet verteilt angeordneten Verstelleinheiten (20-1, 20-2) gebildet ist.

8. Luftleitvorrichtung nach einem der vorangehenden Ansprüche, wobei die ersten Enden der beiden Schwenklenker (22, 28) an bezüglich der Karosserie ortsfesten Schwenklagern (24, 30) gelagert sind.

9. Luftleitvorrichtung nach Anspruch 8, wobei der Abstand der karosserieseitigen Schwenklager (24, 30) der beiden Schwenklenker (22, 28) größer als der Abstand der beiden Anlenkungen (26, 32) im Bereich der Spoilerbasis (14) ist.

## Claims

1. Air-guiding device of a vehicle (1), comprising a spoiler (12) fastened to a spoiler base (14), and an adjusting device (20) for adjusting the spoiler base (14) between an inoperative position, in which the spoiler (12) is essentially situated within the vehicle contour (3), and at least one first operating position, in which the spoiler (12) is deployed beyond the vehicle contour (3) in order to provide a downforce effect during driving, the adjusting device (20) comprising:
- a first pivoting link (22), of which a first end is mounted (24) on the body of the vehicle (1) in a manner which is suitable for allowing the first pivoting link (22) to be pivoted about a first pivoting axis extending in the transverse direction of the vehicle, and of which a second end is pivotally attached (26) in a front region of the spoiler base,
- a second pivoting link (28), of which a first end is mounted (30) on the body of the vehicle (1) behind the first end of the first pivoting link (22) in a manner which is suitable for allowing the second pivoting link (28) to be pivoted about a second pivoting axis extending in the transverse direction of the vehicle, and of which a second end is pivotally attached (32) in a rear region of the spoiler base (14), the first pivoting link (22) being shorter than the second pivoting link (28), and
- controllable driving means for pivoting the two pivoting links (22, 28) in order to adjust the spoiler base (14) between the inoperative position and the operating position,
the adjusting device (20) being designed in such a way as to be suitable for overextending the joint (26) between the front region of the spoiler base (14) and the second end of the first pivoting link (22) during deployment of the spoiler (12),
**characterized in that** the driving means comprise a driving link which engages directly on the first pivoting link (22) and which is pivotally attached, on the one hand, in a central region of the first pivoting link (22) and, on the other hand, to the end of a crank that can be motor-driven, and **in that** a mechanical stop is provided for the purpose of stopping the deployment motion before the position of maximum overextension of the joint (26) is reached, and the stop is reached in a position of the joint (26) which is at a maximum of 10° from the position of maximum overextension.

2. Air-guiding device according to Claim 1, the deployment angle of the spoiler (12) being in a range of from 10° to 50° in the first operating position.

3. Air-guiding device according to one of the preceding claims, infinitely variable adjustability being provided, at least in the adjustment range from the inoperative position to the first operating position of the spoiler (12).

4. Air-guiding device according to one of the preceding claims, the adjusting device (20) providing at least one second operating position when the joint (26) between the front region of the spoiler base (14) and the second end of the first pivoting link (22) is overextended, in which second operating position the spoiler (12) provides a braking effect during driving.

5. Air-guiding device according to Claim 4, the deployment angle of the spoiler (12) being in a range of from 50° to 90° in the second operating position.

6. Air-guiding device according to Claim 4 or 5, the second operating position corresponding to the position in which motion is stopped by the mechanical stop before the position of maximum overextension of the joint (26) is reached.

7. Air-guiding device according to one of the preceding claims, the adjusting device (20) being formed by at least two adjusting units (20-1, 20-2), which are arranged in a distributed manner when viewed in the transverse direction of the vehicle.

8. Air-guiding device according to one of the preceding claims, the first ends of the two pivoting links (22, 28) being mounted on pivot bearings (24, 30), the location of which is fixed relative to the body.

9. Air-guiding device according to Claim 8, the spacing between the body-end pivot bearings (24, 30) of the two pivoting links (22, 28) being greater than the spacing between the two pivotal attachment points (26, 32) in the region of the spoiler base (14).

## Revendications

1. Déflecteur d'air de véhicule (1), comprenant un déporteur (12) fixé à une base de déporteur (14) ainsi qu'un dispositif de réglage (20) permettant de régler la base de déporteur (14) entre une position de repos dans laquelle le déporteur (12) repose pour l'essentiel dans le contour du véhicule (3) et au moins une première position de fonctionnement dans laquelle le déporteur (12) est ouvert au-delà du contour du véhicule (3), pour permettre un effet d'entraînement de sortie lorsque le véhicule est en marche, le dispositif de réglage (20) comprenant :
un premier bras oscillant (22) depuis lequel une première extrémité est disposée (24) de façon adaptée contre la carrosserie du véhicule (1), pour un pivotement du premier bras oscillant (22) autour d'un premier axe de pivotement s'étendant dans la direction transversale du véhicule et depuis lequel une deuxième extrémité est articulée (26) dans une zone avant de la base de déporteur ;
un deuxième bras oscillant (28) depuis lequel une première extrémité est disposée (30) de façon adaptée contre la carrosserie du véhicule (1), derrière la première extrémité du premier bras oscillant (22), pour un pivotement du deuxième bras oscillant (28) autour d'un deuxième axe de pivotement s'étendant dans la direction transversale du véhicule et depuis lequel une deuxième extrémité est articulée (32) dans une zone arrière de la base de déporteur (14), le premier bras oscillant (22) étant plus court que le deuxième bras oscillant (28) ; et
des moyens d'entraînement commandables permettant de faire pivoter les deux bras oscillants (22, 28), pour déplacer la base de déporteur (14) entre la position de repos et la position de fonctionnement ;
le dispositif de réglage (20) étant réalisé de façon adaptée pour tendre l'articulation (26) entre la zone avant de la base de déporteur (14) et la deuxième extrémité du premier bras oscillant (22) lors de l'ouverture du déporteur (12) ;
**caractérisé en ce que** les moyens d'entraînement comprennent un bras oscillant d'entraînement s'engrenant directement au premier bras oscillant pivotant (22), ledit bras oscillant d'entraînement étant articulé d'une part dans une zone centrale du premier bras oscillant (22) et étant articulé d'autre part à l'extrémité d'une manivelle actionnable par moteur et **en ce qu'**une butée mécanique est prévue pour arrêter le mouvement d'ouverture avant d'atteindre la position maximale d'extension de l'articulation (26) et **en ce que** la butée est atteinte dans une position de l'articulation (26) éloignée tout au plus de 10° par rapport à la position d'extension maximale.

2. Déflecteur d'air selon la revendication 1, dans lequel l'angle d'ouverture du déporteur (12) se situe dans la zone allant de 10° à 50° dans la première position de fonctionnement.

3. Déflecteur d'air selon l'une quelconque des revendications précédentes, dans lequel un déplacement sans à-coups est prévu au moins dans la zone de déplacement allant de la position de repos à la première position de fonctionnement du déporteur (12).

4. Déflecteur d'air selon l'une quelconque des revendications précédentes, dans lequel le dispositif de réglage (20) prévoit au moins une deuxième position de fonctionnement dans laquelle le déporteur (12) réalise un effet de freinage pendant que le véhicule avance en cas d'extension de l'articulation (26) entre la zone avant de la base de déporteur (14) et la deuxième extrémité du premier bras oscillant (22).

5. Déflecteur d'air selon la revendication 4, dans lequel l'angle d'ouverture du déporteur (12) est compris dans la plage située de 50° à 90° dans la deuxième position de fonctionnement.

6. Déflecteur d'air selon la revendication 4 ou 5, dans lequel la deuxième position de fonctionnement correspond à la position arrêtée par la butée mécanique avant d'atteindre la position d'extension maximale de l'articulation (26).

7. Déflecteur d'air selon l'une quelconque des revendications précédentes, dans lequel le dispositif de réglage (20) est formé par au moins deux unités de réglage (20-1, 20-2) disposées de façon répartie dans la direction transversale du véhicule.

8. Déflecteur d'air selon l'une quelconque des revendications précédentes, dans lequel les premières extrémités des deux bras oscillants (22, 28) sont disposées dans un palier de pivotement (24, 30) fixe par rapport à la carrosserie.

9. Déflecteur d'air selon la revendication 8, dans lequel l'écart entre les paliers de pivotement (24, 30) côté carrosserie des deux bras oscillants (22, 28) est supérieur à l'écart entre les deux articulations (26, 32) dans la zone de la base de déporteur (14).
